# EUROPEAN PATENT SPECIFICATION

(11) **EP 2 788 276 B1**
(45) Date of publication and mention of the grant of the patent: **17.08.2016**
(21) Application number: 12821035.8
(22) Date of filing: 07.12.2012
(51) Int. Cl.: B67D 7/02, B67D 1/10, A47K 5/12, B05B 11/00, F04B 43/08

(54) **DISPENSING DEVICE**
SPENDERVORRICHTUNG
DISPOSITIF DE DOSAGE

(30) Priority: 09.12.2011 SE 1100905
(43) Date of publication of application: 15.10.2014
(73) Proprietor: ASEPT INTERNATIONAL AB, 226 60 Lund (SE)
(72) Inventor: DRENNOW, Sten, S-224 60 Lund (SE)
(74) Representative: Zacco Sweden AB
(86) International application number: PCT/IB2012/057073
(87) International publication number: WO 2013/084203

(56) References cited:
- WO-A1-87/02422
- WO-A1-93/09408
- WO-A1-03/010085
- US-A- 5 242 083
- US-A1- 2007 068 966

## Description

### Technical field:

The present invention relates to a dispensing device for dispensing a liquid foodstuff product from a container, wherein a hose member of an elastic and resilient material is connectable with the container so that product can be made to flow from the container into the hose member, which is compressible in order to dispense product therefrom. The hose member is designed so as to regain, by its own resilience, an original shape after compression thereof. A check valve is arranged to close so as to prevent product, upon compressing the tube member, from flowing back into the container, and a discharge valve is arranged to open so as to allow dispensing of product from the hose member and close it when so done. The hose member is disposed in a tube member or the like, and a pressure means is provided for compressing side portions of the hose member in order to dispense product therefrom.

Known examples of dispensing devices are disclosed in WO 03/010085 A1 and US 2007/068966 A1. WO 03/010085 A1 discloses a handheld dispensing device with a housing that may be gripped in one hand for manually actuating a pump for dispensing substance out of one or more dispensing nozzles. US 2007/068966 A1 discloses a dispensing device using a peristaltic pump including a motor for dispensing food products.

### Problem solution:

A dispensing device of the type described above is known from the document US. 5 730 327. This known dispensing device has a hose member which you grip and compress by your hand to dispense the product contained therein. Since the hose member is more or less compressible and at different locations thereof, the quantity of product dispensed in each case may vary widely. This means that this known dispensing device cannot be used if it is desired to dispense precise quantities of product each time and at several consecutive instances. Additionally, it is a problem that the hose member must be thick-walled in order to withstand many and rapid compressions, which with respect to the manufacture and power requirement thereof may be disadvantageous.

The object of the present invention is to provide a dispensing device which by simple means eliminates these problems, and this is solved essentially in that the invention exhibits the characterizing features set forth in the appended claims.

In that the invention exhibits the said characteristics it is achieved that a predefined, exact quantity of product can be dispensed each time and also at several successive instances. Furthermore, the hose member can be designed with thin walls, thereby making it easy to compress for dispensing the product. In addition, the hose member gets the support necessary during dispensing and is thus in a completely protected position.

### List of Figures:

Figure 1 shows a section of a dispensing device according to the invention with a container positioned thereon.
Figure 2 shows the dispensing device according to Figure 1 where product is dispensed therefrom.
Figure 3 shows a section 3-3 of the dispensing device according to Figure 2.
Figure 4 shows the dispensing device according to Figure 1 where product is sucked out from the container.
Figure 5 shows schematically parts of the dispensing device according to the invention with an alternatively shaped container.

### Description of a preferred embodiment of the dispensing device according to the invention.

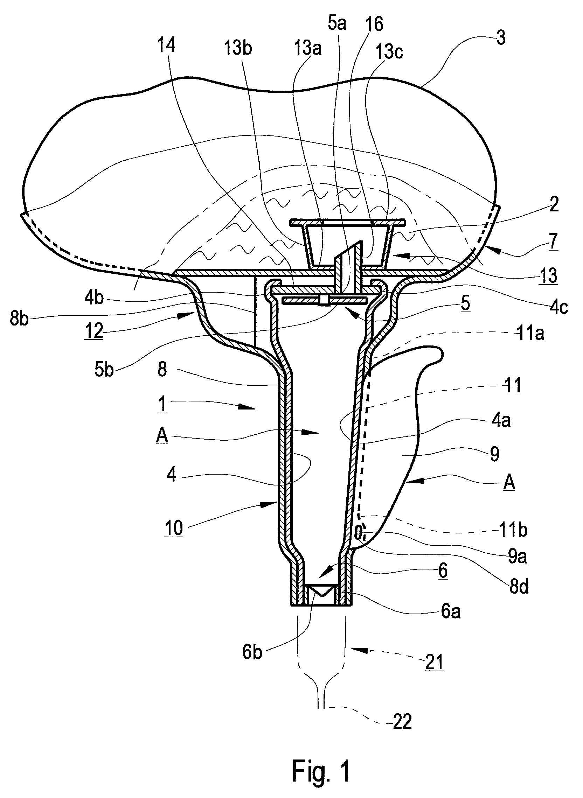

The dispensing device 1 shown in Figures 1-4 is intended for dispensing a liquid foodstuff product 2, e.g. ketchup, mustard, dressing or the like, from a container 3 of flexible material. A hose member 4 of elastic and resilient material is connectable with the container 3 so that product 2 can flow from the container 3 into the hose member 4. The hose member 4 is compressible so as to dispense the product 2 therefrom, and it can regain its original shape when the compressing stops. A check valve 5 is arranged to close so as to prevent the product 2, upon compressing the hose member 4, from flowing back from the hose member 4 into the container 3, and a discharge valve 6 is arranged to open so as to allow discharge of the product 2 out from the hose member 4 and to close it when so done.

The container 3 is positionable in a cup-shaped member 7 having a tube member 8, which is designed so as to allow insertion of the hose member 4 therein simultaneously with the container 3 being placed in the cup-shaped member 7. The tube member 8 has a pressure means 9 which can be imparted with a dispensing movement A into the tube member 8 in order to press in the side portions 4a of the hose member 4 into it and into the tube member 8 in a direction A1 towards opposite portions 8a of the tube member 8, the latter portions 8a constituting support for the hose member 4. By this compressing of the side portion 4a, the volume in the hose member 4 is reduced causing product 2 to be dispensed therefrom. In that the hose member 4 with essential portions of its circumference and essential portions of its length abuts against the tube member 8 it thus forms a support sleeve 10 for the hose member 4 at the dispensing of product 2.

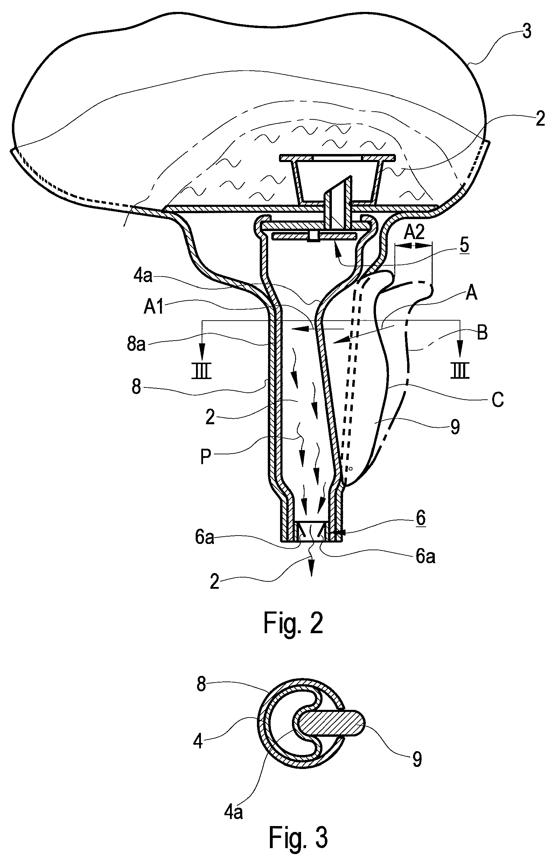

The pressure means 9 is so arranged that it can be imparted with dispensing movements A with predetermined size A2 (see Figure 2) to achieve a predetermined volume reduction of the inner parts of the hose member 4 and thus dispense a predetermined quantity of product 2 from the hose member 4 at each dispensing instance.

To be able to compress the hose member 4 by the lowest possible compressive force on the pressure means 9, the said member can be pivotally mounted on the tube member 8 as a single-arm lever.

The pressure means 9 is also preferably arranged so that it can compress such side portions 4a of the hose member 4 that are closest to the check valve 5 farther into the tube member 8 than such portions of the hose member 4 that are closest to the discharge valve 6. Hereby it is facilitated that product 2 flows in direction P towards the discharge valve 6 and via this out of the hose member 4.

The tube member 8 has an oblong slot 11 extending in a longitudinal direction upwards along the same, and the pressure means 9 is oblong, extending along the slot 11 and being insertable therein in order to compress the side portions 4a of the hose member 4 in the tube member 8. The pressure means 9 is pivotably mounted at the tube member 8 below the slot 11, and thus it may be pivoted so that the side portions 4a within upper portions 11 a of the slot are pressed farther into the tube member 8 than the hose member 4 within lower portions of the slot 11 b.

The hose member 4 is so flexibly formed that its compressed side portions 4a can spring back to an original shape, and thereby they can return the pressure means 9 from a compressed position C to its initial position B.

The tube member 8 may be designed as a handle which can be gripped by a hand, and the pressure means 9 may be arranged to be operated by the same hand. Furthermore, the pressure means 9 can preferably be snapped onto the tube member 8 so as to be pivotable in relation thereto. The hose member 4 and the tube member 8 may be conically tapered in the direction from the check valve 5 and the cup-shaped member 7, and the tube member 8 may be designed as a unit of the same material.

The cup-shaped member 7 may have a downwards directed portion 12 which downwardly passes into the tube member 8, the said downwards directed portion 12 being designed to allow that such portions 4b of the hose member 4, which exhibit the check valve 5, can be passed down into it.

The check valve 5 is disposed in an inlet portion 4b of the hose member 4 and it has an attachment part 14 in the form of a plate of the like, which engages with an annular groove 4c in the inlet portion 4b so that the attachment part 14 is fixedly attached thereto. The attachment part 14 has a tubular coupling part 16, extending through the attachment part 14 in an upwards direction therefrom, which has an inclined end edge and around which an inner side of the attachment part 14 forms a valve seat 5a for the check valve 5. The said valve has a valve body 5b of flexible material, which is disposed on the attachment part 14 so that it can interact with the valve seat 5a to close the check valve 5.

In the inlet portion 4b of the hose member 4 there may be support parts 8b to prevent the inlet portion 4b from expanding in radial directions when the pressure in the hose member is increased. This prevents leakage from arising between the attachment part 14 and the inlet portion 4b.

The discharge valve 6 may have an annular outer portion 6a and a number, for example three, of valve flaps 6b directed inwards towards each other and being arranged to abut against each other with inner edges in order to keep the discharge valve 6 closed. The outer portion 6a and the valve flaps 6b are preferably formed in one piece of a flexible material. The valve flaps 6b are designed so that they can be folded away almost completely in order to completely open the discharge valve 6 so that also large particles in the product 2 can pass out through the same. Furthermore, the valve flaps 6b are arranged to spring back to their original positions when the pressure in the hose member 4 stops so as to close the discharge valve 6.

The discharge valve 6 is designed such that the tube member 8, directly or via the hose member 4, grips its annular outer portion 6a so that the tube member 8 prevents the outer portion 6a from expanding in radial directions. Hereby it is ensured that the valve flaps 6b are sure to spring back to their valve-closing positions and are retained therein, whereby subsequent dripping from the hose member 4 is prevented.

A special embodiment of the pressure means 9 can be configured to dispense a specific quantity of product 2 from the hose member 4, and such a pressure means 9 may be interchangeable with another pressure means 9 of another embodiment to dispense a different amount of product 2. In combination therewith, or as alternative thereto, the position of a pressure means 9 on the tube member 8 can be changed so as to achieve the same purpose.

In the embodiment of the container 3 shown in Figures 1-4, the container has an inner coupling part 13 which may have an annular outer portion 13a disposed on the inner side of an unbroken wall portion of the container 3. The said outer portion 13a may have a number of inwards directed legs 13b and an annular inner portion 13c disposed thereon.

In order to dispense product 2 from a container 3, the container is first placed on a support, and the hose member 4 is connected thereto by pressing the coupling part 16 through the wall portion of the container 3 and pressing the coupling part 16 fixedly onto the annular outer portion 13a of the inner coupling part 13. Hereby the hose member 4 is attached to the container 3, and communication is established between the container 3 and the hose member 4 so that product 2 can flow into it from the container 3.

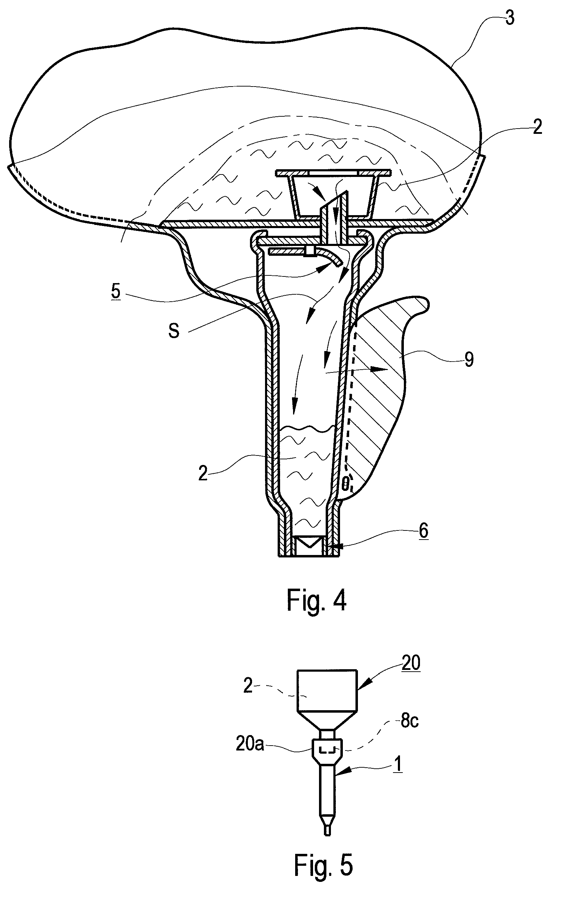

The container 3 with the hose member 4 attached thereto is then placed in the cup-shaped member, and the hose member 4 is passed down into the tube member 8. Hereafter, the tubular member 8, which is thus formed as a handle, is gripped by the hand, and the pressure means 9 can be compressed by the same hand. This entails that the side portions 4a of the hose member 4 are compressed, and when you let go of the pressure means 9, the said side portions 4a return to their original shape whereby a subpressure arises in the hose member 4, the valve 5 thereby opening and product 2 being caused to flow from the container 3 into the hose member 4 (see Figure 4, arrows S). When this has happened and the pressure means 9 is compressed again, the pressure in the hose member 4 will close the check valve 5 and open the discharge valve 6, and a specific quantity of product 2 will be dispensed from the hose member 4 through the discharge valve 6 (see Figure 2, arrows P). When this dispensing has been completed and you let go of the pressure means 9, the side portion 4a returns to its original shape and returns the pressure means 9 to its initial position B. Furthermore, the volume in the hose member 4 will thereby increase, and the check valve 5 is thereby opened again and a new portion of the product 2 is sucked into the tube member 4.

In the embodiment according to Figure 5, the dispensing device 1 is used for dispensing product from a type of container 20 which differs from the container 3. The dispensing device 1 may be directly connectable with the said container 20, or be connectable therewith via a hose (not shown). In order to be able to connect the dispensing device 1 directly with the container 20, it has a coupling part 20a which may have external threads. The tube member 8 may in this case have a coupling part 8c with inner threads so that the coupling parts 20a, 8c can be coupled with each other by being screwed onto each other. The inlet portion 4b of the hose member 4 may in this case abut tightly against the inner side of the tube member 8 so that product 2 cannot penetrate between the hose member 4 and the tube member 8. The coupling parts 20a, 8c are open, and product 2 can therefore flow from the container 20 into the hose member 4 when check valve 5 is open. Incidentally, the dispensing device 1 can have the same or a similar embodiment as in Figures 1-4, and the dispensing of product 2 takes place in the manner previously described.

The invention is not limited to the embodiment described above but may vary within the scope of the appended claims. Thus, the different portions of the dispensing device 1 may be differently shaped, and this also applies to the containers 3 and 20. For example, the tube member 8 may have a different wall structure than that shown and there may be more than one pressure means 9. As examples of details not more closely described, it could be mentioned that the pressure means 9 may comprise a shaft-like portion 9a which can be hooked into an oblong hole 8d in the tube member 8 such that the portion 9a can be turned in the oblong hole 8d. Additionally, in its function as a support sleeve 10, the tube member 8 can constitute a support for the hose member 4 and allow it to accurately resume its original shape. The container 3 can/must be completely closed before it is connected with the hose member 4. Furthermore, there may be a second hose member 21 with a second discharge valve 22, and this second hose member 21 may be connectable with the first mentioned hose member 4 and/or with the tube member 8 so that the second discharge valve 22 will be located downstream of the first mentioned discharge valve. This ensures that one of the discharge valves can keep the device closed if the other one for some reason cannot be closed, for example if a large particle in the product 2 gets stuck therein.

## Claims

1. A dispensing device for dispensing a liquid foodstuff product (2) from a container (3 or 20) of flexible material by means of hand-operation,
wherein the container (3 or 20) and a hose member (4) of elastic and resilient material are connectable with each other such that product (2) can flow from the container (3 or 20) into the hose member (4);
wherein the hose member is compressible in order to dispense product (2) therefrom,
wherein the hose member (4) is designed so as to regain, by its own resilience, an original shape after compression thereof,
wherein a check valve (5) is arranged to close so as to prevent product (2), upon compressing the hose member (4), from flowing back into the container (3 or 20);
wherein a discharge valve (6) is arranged to open so as to allow dispensing of product (2) from the hose member (4) and to close when so done,
wherein the hose member (4) is disposed in a tube member (8) or the like, and
wherein a pressure means (9) is arranged to compress side portions (4a) of the hose member (4) in order to dispense product (2) therefrom,
the tube member (8) has an oblong slot (11) extending in a longitudinal direction along the tube member (8);
that the pressure means (9) is oblong, extends along the slot (11), and is insertable therein in order to compress side portions (4a) of the hose member (4) in the slot (11),
that the pressure means (9) is pivotally mounted on tube member (8) as a one-arm lever,
**characterized in that**
the container (3 or 20) and the hose member (4) can be coupled with each other by pressing a tubular coupling part (16), which is connected with the hose member (4), through a wall portion of the container (3 or 20) and pressing the coupling member (16) fixedly onto an inner coupling part (13) disposed in the container (3 or 20), whereby communication is established between the container (3 or 20) and the hose member (4) so that product (2) can flow from the container (3 or 20) into the tube member (4),
that the tube member (8) is disposed on a cup-like member (7) being designed such that the container (3) can be laid down therein, and
that the tube member (8) is disposed on the cup-shaped member (7) in such a manner that when the container (3) is laid down therein, the hose member (4) can be passed down into the tube member (8), and
that the cup-shaped member (7) and the tube member (8) are formed as one unit of the same material.

2. A dispensing device according to claim 1,
**characterized in that** the discharge valve (6) has an annular outer portion (6a) and valve flaps (6b) arranged thereon and being directed inwards against each other, the said flaps being arranged so as to abut against each other in order to keep the discharge valve (6) closed,
that the valve flaps (6b) are arranged so as to be made to fold away to substantially open the discharge valve (6) so that product (2) can flow out from the hose member (4), and
that the tube member (8), directly or via the hose member (4), grips the outer portion (6a) and supports it in order to prevent the outer portion (6a) from expanding in radial directions,
whereby it is ensured that the valve flaps (6b), after opening of the discharge valve (6), return to abutment against each other and remain in these positions.

3. A dispensing device according to claim 1 or 2,
**characterized in that** the tube member (8) is designed so as to form a support sleeve (10) to support the hose member (4) when the side portions (4a) thereof are compressed and to allow the hose member (4) to accurately regain its original shape.

4. A dispensing device according to any of the preceding claims,
**characterized in that** the pressure means (9) is arranged so as to compress side portions (4a) of the hose member (4) in a direction (A1) towards opposite portions (8a) of the tube member (8) so that the said opposite portions (8a) constitute support members for the hose member (4) when it is compressed.

5. A dispensing device according to any one of the preceding claims,
**characterized in that** the hose member (4) with essential portions of its circumference and its length abuts against the tube member (8) so that it forms a support sleeve (10) for the hose member (4).

6. A dispensing device according to any of the preceding claims,
**characterized in that** the pressure means (9) is arranged so as to compress such side portions (4a) of the hose member (4) that are disposed closest to the check valve (5) farther in than such other portions of the tube member (4) that are disposed in the vicinity of the discharge valve (6).

7. A dispensing device according to any of the preceding claims,
**characterized in that** the hose member (4) is designed such that compressed side portions (4a) thereof spring back to an original shape when pressure thereon ceases, whereby the said side portions (4a) return the pressure means (9) from a compressed position (C) to an initial position (B).

8. A dispensing device according to any of the preceding claims,
**characterized in that** that the pressure means (9) can be snapped onto the tube member (8) so that it can be pivoted in relation thereto.

9. A dispensing device according to any of the preceding claims,
**characterized in that** both the hose member (4) and tube member (8) are conically tapered.

10. A dispensing device according to any of the preceding claims,
**characterized in that** the hose member (4) has an inlet portion (4b) which is designed for accommodating the check valve (5), and
that the tube member (8) has support portions (8b) in order to prevent the inlet portion (4b) from extending in radial directions.

11. A dispensing device according to any of the preceding claims,
**characterized in that** different pressure means (9) are attachable to the tube member (8) and/or that the pressure means (9) is positionable at various places on the tube member (8) in order to dispense different amounts of product (2) depending on which pressure means (9) are used and/or where they are disposed on the tube member (8).

12. A dispensing device according to any of the preceding claims,
**characterized in that** the container (3 or 20) is completely closed before it is connected with the hose member (4).

13. A dispensing device according to any of the preceding claims,
**characterized in that** the hose member (4) and/or the tube member (8) is/are connectable with a second hose member (21) having a second discharge valve (22), which is disposed, in the direction of flow, after the first mentioned discharge valve (6).

## Patentansprüche

1. Spendervorrichtung zum Spenden eines flüssigen Nahrungsmittelprodukts (2) aus einem Behälter (3 oder 20) aus flexiblem Material mittels Handbetrieb,
wobei der Behälter (3 oder 20) und ein Schlauchelement (4) aus elastischem und spannkräftigem Material miteinander verbindbar sind, dass das Produkt (2) aus dem Behälter (3 oder 20) in das Schlauchelement (4) fließen kann;
wobei das Schlauchelement komprimierbar ist, um Produkt (2) davon zu spenden,
wobei das Schlauchelement (4) derart entworfen ist, um durch seine eigene Spannkraft nach dessen Kompression wieder eine Originalform zu erlangen,
wobei ein Rückschlagventil (5) zum Schließen angeordnet ist, um, beim Komprimieren des Schlauchelements (4), das Zurückfließen von Produkt (2) in den Behälter (3 oder 20) zu verhindern;
wobei ein Ablassventil (6) derart angeordnet ist, um beim Öffnen das Spenden von Produkt (2) aus dem Schlauchelement (4) zu erlauben, und danach zu schließen,
wobei das Schlauchelement (4) in einem Rohrelement (8) oder dergleichen angeordnet ist, und
wobei ein Druckmittel (9) angeordnet ist, um Seitenabschnitte (4a) des Schlauchelements (4) zu komprimieren, um Produkt (2) davon zu spenden,
das Rohrelement (8) eine sich in einer längslaufenden Richtung entlang des Rohrelements (8) erstreckende längliche Aussparung (11) aufweist;
dass das Druckmittel (9) länglich ist, sich entlang der Aussparung (11) erstreckt und darin einführbar ist, um Seitenabschnitte (4a) des Schlauchelements (4) in der Aussparung (11) zu komprimieren,
dass das Druckmittel (9) schwenkbar am Rohrelement (8) als ein einarmiger Hebel montiert ist,
**dadurch gekennzeichnet, dass**
der Behälter (3 oder 20) und das Schlauchelement (4) miteinander durch Drücken eines ringförmigen Kopplungsstücks (16), welches mit dem Schlauchelement (4) gekoppelt ist, durch einen Wandabschnitt des Behälters (3 oder 20) und Festdrücken des Kopplungselements (16) auf ein im Behälter (3 oder 20) angeordnetes inneres Kopplungsstück (13) gekoppelt werden können, wobei zwischen dem Behälter (3 oder 20) und dem Schlauchelement (4) Kommunikation derart etabliert wird, dass Produkt (2) vom Behälter (3 oder 20) in das Schlauchelement (4) fließen kann,
dass das Rohrelement (8) auf einem tassenähnlichen Element (7), derart entworfen, dass Behälter (3) darin hineingelegt werden kann, angeordnet ist, und
dass das Rohrelement (8) auf dem tassenförmigen Element (7) auf solche Weise angeordnet ist, dass, wenn der Behälter (3) darin hineingelegt wird, das Schlauchelement (4) in das Rohrelement (8) weitergegeben werden kann, und
dass das tassenförmige Element (7) und das Rohrelement (8) als eine Einheit aus dem gleichen Material gebildet sind.

2. Spendervorrichtung nach Anspruch 1,
**dadurch gekennzeichnet, dass** das Ablassventil (6) einen ringförmigen äußeren Abschnitt (6a) und darauf angeordnete und gegeneinander nach innen gerichtete Ventilklappen (6b) aufweist, wobei die Klappen derart angeordnet sind, dass sie einander angrenzen, um das Ablassventil (6) geschlossen zu halten,
dass die Ventilklappen (6b) derart angeordnet sind, um weggeklappt zu werden, um im Wesentlichen das Ablassventil (6) zu öffnen, so dass Produkt (2) aus dem Schlauchelement (4) hinausfließen kann, und
dass das Rohrelement (8), direkt oder durch das Schlauchelement (4), den äußeren Abschnitt (6a) fasst und ihn unterstützt, um zu verhindern, dass der äußere Abschnitt (6a) in Radialrichtungen expandiert,
wodurch sichergestellt wird dass die Ventilklappen (6b), nach Öffnen des Ablassventils (6), in einander angrenzende Positionen zurückkehren und in diesen Positionen verbleiben.

3. Spendervorrichtung nach Anspruch 1 oder 2,
**dadurch gekennzeichnet, dass** das Rohrelement (8) derart entworfen ist, um eine Stützhülse (10) zu bilden, um das Schlauchelement (4) zu stützen, wenn die Seitenabschnitte (4a) davon komprimiert werden, und um dem Schlauchelement (4) zu erlauben, seine Originalform akkurat wiederzuerlangen.

4. Spendervorrichtung nach einem der vorstehenden Ansprüche,
**dadurch gekennzeichnet, dass** das Druckmittel (9) derart angeordnet ist, um Seitenabschnitte (4a) des Schlauchelements (4) in einer Richtung (A1) hin zu gegenüberliegenden Abschnitten (8a) des Rohrelements (8) zu komprimieren, so dass die gegenüberliegenden Abschnitte (8a) Stützelemente für das Schlauchelement (4) darstellen, wenn es komprimiert wird.

5. Spendervorrichtung nach einem der vorstehenden Ansprüche,
**dadurch gekennzeichnet, dass** das Schlauchelement (4) mit wesentlichen Abschnitten seines Umfangs und seiner Länge gegen das Rohrelement (8) angrenzt, so dass es eine Stützhülse (10) für das Schlauchelement (4) bildet.

6. Spendervorrichtung nach einem der vorstehenden Ansprüche,
**dadurch gekennzeichnet, dass** das Druckmittel (9) derart angeordnet ist, um die Seitenabschnitte (4a) des Schlauchelements (4), die am nächsten zum Rückschlagventil (5) angeordnet sind, weiter innen als weitere Abschnitte des Rohrelements (4), die in der Nähe des Ablassventils (6) angeordnet sind, zu komprimieren.

7. Spendervorrichtung nach einem der vorstehenden Ansprüche,
**dadurch gekennzeichnet, dass** das Schlauchelement (4) derart entworfen ist, dass komprimierte Seitenabschnitte (4a) davon in eine Originalform zurückfedern, wenn Druck darauf wegfällt, wobei die Seitenabschnitte (4a) das Druckmittel (9) aus einer komprimierten Position (C) zu einer Ausgangsposition (B) zurückbringen.

8. Spendervorrichtung nach einem der vorstehenden Ansprüche,
**dadurch gekennzeichnet, dass** das Druckmittel (9) derart auf das Rohrelement (8) geschnappt werden kann, dass es in Bezug darauf geschwenkt werden kann.

9. Spendervorrichtung nach einem der vorstehenden Ansprüche,
**dadurch gekennzeichnet, dass** sowohl das Schlauchelement (4) als auch das Rohrelement (8) sich konisch verjüngen.

10. Spendervorrichtung nach einem der vorstehenden Ansprüche,
**dadurch gekennzeichnet, dass** das Schlauchelement (4) einen Einlassabschnitt (4b) aufweist, welcher zum Aufnehmen des Rückschlagventils (5) entworfen ist,
dass das Rohrelement (8) Stützabschnitte (8b) aufweist, um zu verhindern, dass der Einlassabschnitt (4b) sich in Radialrichtungen ausdehnt.

11. Spendervorrichtung nach einem der vorstehenden Ansprüche,
**dadurch gekennzeichnet, dass** unterschiedliche Druckmittel (9) am Rohrelement (8) anbringbar sind und/oder dass das Druckmittel (9) an verschiedenen Stellen am Rohrelement (8) positionierbar ist, um unterschiedliche Mengen von Produkt (2) zu spenden, in Abhängigkeit davon, welche Druckmittel (9) verwendet werden und/oder wo sie auf dem Rohrelement (8) angeordnet sind.

12. Spendervorrichtung nach einem der vorstehenden Ansprüche,
**dadurch gekennzeichnet, dass** der Behälter (3 oder 20), bevor er mit dem Schlauchelement (4) verbunden wird, vollständig geschlossen ist.

13. Spendervorrichtung nach einem der vorstehenden Ansprüche,
**dadurch gekennzeichnet, dass** das Schlauchelement (4) und/oder das Rohrelement (8) mit einem zweiten Schlauchelement (21) mit einem zweiten Ablassventil (22), welches nach dem erstgenannten Ablassventil (6) in Fließrichtung angeordnet ist.

## Revendications

1. Dispositif de dosage pour doser un produit alimentaire liquide (2) à partir d'un récipient (3 ou 20) en matériau souple au moyen d'une opération manuelle,
dans lequel le récipient (3 ou 20) et un élément de tuyau (4) d'un matériau souple et élastique peuvent être reliés l'un à l'autre si bien que le produit (2) peut refluer du récipient (3 ou 20) dans l'élément de tuyau (4);
dans lequel l'élément flexible est compressible pour doser le produit (2) à partir de celui-ci,
dans lequel l'élément de tuyau (4) est conçu de manière à retrouver, par sa propre élasticité, une forme originale après une compression de celui-ci,
dans lequel un clapet de retenue (5) est agencé pour fermer de façon à empêcher le produit (2), lors de la compression de l'élément de tuyau (4), de refluer dans le récipient (3 ou 20);
dans lequel une soupape de décharge (6) est agencée pour ouvrir de façon à permettre le dosage du produit (2) de l'élément de tuyau (4) et pour fermer lorsqu'il est ainsi terminé,
dans lequel l'élément de tuyau (4) est disposé dans un élément tubulaire (8) ou analogue, et
et dans lequel un moyen de pression (9) est agencé pour comprimer les parties latérales (4a) de l'élément de tuyau (4) pour doser le produit (2) à partir de là,
l'élément tubulaire (8) comporte une fente allongée (11) s'étendant dans une direction longitudinale le long de l'élément tubulaire (8);
que le moyen de pression (9) est allongé, s'étend le long de la fente (11) et peut y être inséré afin de comprimer les parties latérales (4a) de l'élément de tuyau (4) dans la fente (11),
que le moyen de pression (9) est monté à pivotement sur l'élément tubulaire (8) en tant que levier à un bras,
**caractérisé en ce que**
le récipient (3 ou 20) et l'élément de tuyau (4) peuvent être couplés l'un à l'autre en pressant un élément d'accouplement tubulaire (16), qui est relié à l'élément de tuyau (4), à travers une partie de paroi du récipient (3 ou 20) et pressant l'élément d'accouplement (16) de manière fixe à une partie d'accouplement intérieure (13) disposée dans le récipient (3 ou 20), la communication étant établie entre le récipient (3 ou 20) et l'élément de tuyau (4) si bien que le produit (2) peut refluer du récipient (3 ou 20) dans l'élément de tuyau (4),
que l'élément de tuyau (8) est disposé sur un élément en forme de coupelle (7) étant conçu si bien que le récipient (3) peut y être déposé, et
que l'élément tubulaire (8) est disposé sur l'élément en forme de coupelle (7) si bien que lorsque le récipient (3) est y déposé, l'élément de tuyau (4) peut être baissé dans l'élément tubulaire (8), et
que l'élément en forme de coupelle (7) et l'élément tubulaire (8) sont formés comme une unité du même matériau.

2. Dispositif de dosage selon la revendication 1,
**caractérisé en ce que** la soupape de décharge (6) présente une portion annulaire extérieure (6a) et des clapets de soupape (6b) disposés sur celle-ci et étant dirigés vers l'intérieur l'un contre l'autre, lesdits volets étant agencés de manière à venir en butée l'un contre l'autre afin de maintenir la soupape de décharge (6) fermée,
que les clapets de soupape (6b) sont agencés de manière à replier essentiellement pour ouvrir la soupape de décharge (6) si bien que le produit (2) peut sortir de l'élément de tuyau (4), et
que l'élément tubulaire (8), directement ou par l'intermédiaire de l'élément de tuyau (4), enserre la portion extérieure (6a) et la supporte afin d'empêcher la portion extérieures (6a) de se dilater dans les directions radiales,
assurant que les clapets de soupape (6b), après l'ouverture de la soupape de décharge (6), retournent en appui l'un contre l'autre et restent dans ces positions.

3. Dispositif de dosage selon la revendication 1 ou 2,
**caractérisé en ce que** l'élément tubulaire (8) est conçu de façon à former un manchon de support (10) pour supporter l'élément de tuyau (4) lorsque les parties latérales (4a) de celle-ci sont comprimées et pour permettre à l'élément de tuyau (4) de retrouver exactement sa forme initiale.

4. Dispositif de dosage selon l'une quelconque des revendications précédentes,
**caractérisé en ce que** le moyen de pression (9) est agencé de manière à comprimer des parties latérales (4a) de l'élément de tuyau (4) dans une direction (A1) vers des parties opposées (8a) de l'élément tubulaire (8) si bien que lesdites portions opposées (8a) constituent des éléments de support pour l'élément de tuyau (4) lorsqu'il est comprimé.

5. Dispositif de dosage selon l'une quelconque des revendications précédentes,
**caractérisé en ce que** l'élément de tuyau (4) avec des parties essentielles de sa circonférence et sa longueur est en butée contre l'élément tubulaire (8) si bien qu'il forme un manchon de support (10) pour l'élément de tuyau (4).

6. Dispositif de dosage selon l'une quelconque des revendications précédentes,
**caractérisé en ce que** le moyen de pression (9) est agencé de manière à comprimer telles parties latérales (4a) de l'élément de tuyau (4) qui sont disposées le plus près du clapet de retenue (5) davantage dans telles autres parties de l'élément tubulaire (4) qui sont disposées au voisinage de la soupape de décharge (6).

7. Dispositif de dosage selon l'une quelconque des revendications précédentes,
**caractérisé en ce que** l'élément de tuyau (4) est conçu si bien que les parties latérales comprimées (4a) de celui-ci reviennent élastiquement à une forme initiale lorsque la pression sur celui-ci cesse, de sorte que lesdites parties latérales (4a) retournent le moyen de pression (9) à partir d'une position comprimée (C) à une position initiale (B).

8. Dispositif de dosage selon l'une quelconque des revendications précédentes,
**caractérisé en ce que** le moyen de pression (9) peut être encliqueté sur l'élément tubulaire (8) afin qu'il puisse pivoter par rapport à celui-ci.

9. Dispositif de dosage selon l'une quelconque des revendications précédentes,
**caractérisé en ce que** tant l'élément de tuyau (4) que l'élément tubulaire (8) sont d'une forme conique.

10. Dispositif de dosage selon l'une quelconque des revendications précédentes,
**caractérisé en ce que** l'élément de tuyau (4) présente une partie d'entrée (4b) qui est conçue pour loger le clapet de retenue (5), et
que l'élément tubulaire (8) comporte des parties de support (8b) afin d'empêcher la partie d'entrée (4b) de l'extension dans des directions radiales.

11. Dispositif de dosage selon l'une quelconque des revendications précédentes,
**caractérisé en ce que** différents moyens de pression (9) peuvent être fixés à l'élément tubulaire (8) et/ou que le moyen de pression (9) peut être positionné à différents endroits sur l'élément tubulaire (8) pour doser des quantités différentes en fonction desquelles des moyens de pression (9) sont utilisés et/ou sont disposés sur l'élément de tube (8).

12. Dispositif de dosage selon l'une quelconque des revendications précédentes,
**caractérisé en ce que** le récipient (3 ou 20) est complètement fermé avant qu'il ne soit relié à l'élément de tuyau (4).

13. Dispositif de dosage selon l'une quelconque des revendications précédentes, **caractérisé en ce que** l'élément de tuyau (4) et/ou l'élément tubulaire (8) est/sont raccordé(s) à un deuxième élément de tuyau (21) comportant une deuxième soupape de décharge (22) qui est disposée, dans le sens de l'écoulement, après la première soupape de décharge susmentionnée (6).
